# EUROPEAN PATENT APPLICATION

(11) **EP 4 152 146 A1**
(43) Date of publication of application: **22.03.2023**
(21) Application number: 21820959.1
(22) Date of filing: 27.04.2021
(51) Int. Cl.: G06F 9/30

(54) **DATA PROCESSING METHOD AND DEVICE, AND STORAGE MEDIUM**

(30) Priority: 09.06.2020 CN 202010520154
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Manitz Finsterwald Patent- und Rechtsanwaltspartnerschaft mbB
(86) International application number: PCT/CN2021/090352
(87) International publication number: WO 2021/249054

(57) **Abstract**

A data processing method and device, and a storage medium. A processor of the data processing device comprises an index register group. Said method comprises: obtaining a first index value of an index register according to instruction codes, and determining the index register according to the first index value, the instruction codes being generated by a compiler, and the index register being a register in the index register group (S101); and acquiring first content stored in the index register, and determining a first vector register according to the first content; and executing the instruction codes by accessing the first vector register (S 102).

## Description

### CROSS REFERENCE TO RELATED APPLICATIONS

The present application is based on Chinese patent application NO. 202010520154.9 filed on June 09, 2020, and claims priority to the Chinese patent application, the entire contents of which are herein incorporated by reference.

### TECHNICAL FIELD

The present application relates to the field of signal processing, in particular to a data processing method, a data processing device, and a storage medium.

### BACKGROUND

In the field of high-speed signal processing, some signal processing modules usually use a vector digital signal processor to process signals. In order to speed up the processing of the signals, an instruction with a structure of single instruction multiple data (SIMD) are usually configured to process multiple data simultaneously in one instruction. The vector digital signal processor (VDSP) with a SIMD instruction set usually loads data with a size of several vector registers from a memory outside the VDSP to an internal vector register as input data of the SIMD instruction. After the SIMD instruction is executed, the data in the vector register storing results is stored in the memory outside the VDSP. Generally, the size of a register group is less than 32, and is sufficient to meet the data temporary storage capacity during the execution of several SIMD instructions.

In order to reduce the processing power consumption of the VDSP, some VDSPs provide a very large vector register group. For example, the VDSP with a very large vector register group may provide 512 vector registers of 1024 bits. In this way, the vector registers are not only configured to temporarily store the intermediate results of several instructions, but also may temporarily store all the data of a relatively independent complex signal processing flow, so as to avoid the repeated loading and storage operation of each data when each SIMD instruction is executed. In this way, the power consumption may be effectively reduced and idle loading processing units, idle storage processing units and time slots may be used for other parallel operations in the processor with architecture of very long instruction word (VLIW), which may further improve the parallel processing capability of the VLIW processor.

At present, the VDSP with various SIMD architectures access the vector register by incorporating an index of a target vector register into an instruction word. In response to the number of the vector registers being too large, an index value of the register in the instruction word will occupy too much bits, thereby resulting in a large amount of codes. Furthermore, in response to being fixed in the instruction word, the index of the register cannot be changed at runtime. In response to the same instruction accessing data in different vector registers in a loop, a plurality of codes are needed to execute different access operations, resulting in a large instruction memory.

### SUMMARY

The embodiments of the present disclosure provide a data processing method, a data processing device, and a storage medium, which may reduce the amount of codes and an instruction memory.

The technical solution of the present disclosure is realized as follows.

The embodiments of the present disclosure provide a data processing method. The data processing method is applied to a data processing device. A processor of the data processing device includes an index register group. The method includes the following operations: obtaining a first index value of an index register according to instruction codes and determining the index register according to the first index value; and acquiring a first content stored in the index register and determining a first vector register according to the first content, to execute the instruction codes by accessing the first vector register. Herein, the instruction codes are generated by a compiler, and the index register is a register in the index register group.

The embodiments of the present disclosure provide a data processing device. A processor of the data processing device includes an index register group. The data processing device includes the following parts: a decoding part, configured to obtain a first index value of an index register according to instruction codes; a determining part, configured to determine the index register according to the first index value and determine a first vector register according to a first content, to execute the instruction codes by accessing the first vector register; and an acquiring part, configured to acquire the first content stored in the index register. Herein, the instruction codes are generated by a compiler, and the index register is a register in the index register group.

The embodiments of the present disclosure provide a data processing device. The data processing device includes a processor, a memory, and a communication bus. The processor includes an index register group. In response to executing a running program stored in the memory, the processor executes the data processing method described above.

The embodiments of the present disclosure provide a storage medium. The storage medium stores a computer program. In response to the computer program being executed by a processor, the processor executes the data processing method described above.

The embodiments of the present disclosure provide a data processing method, a data processing device, and a storage medium. A processor of the data processing device includes an index register group. The method includes the following operations: obtaining a first index value of an index register according to instruction codes and determining the index register according to the first index value; and acquiring a first content stored in the index register and determining a first vector register according to the first content, to execute the instruction codes by accessing the first vector register. Herein, the instruction codes are generated by a compiler, and the index register is a register in the index register group. With the above implementation scheme, the processor includes the index register group, and the instruction codes are configured with the index value of the index register. The data processing device is configured to determine the index register by using the instruction codes, and access different vector registers during the execution of the instruction codes in different rounds by accessing and updating the first content in the index register, thereby reducing the amount of codes and an instruction memory.

### BRIEF DESCRIPTION OF THE DRAWINGS

FIG. 1 is a block diagram of the looping execution of an instruction when data is stored in a memory.
FIG. 2 is a flow chart of a data processing method provided by some embodiments of the present disclosure.
FIG. 3 is a schematic diagram of an instruction field of an exemplary piece of instruction code provided by some embodiments of the present disclosure.
FIG. 4 is a schematic structural diagram of an exemplary addressing mapping of a vector register file in a processor provided by some embodiments of the present disclosure.
FIG. 5 is a block diagram of the exemplary looping execution of an instruction provided by some embodiments of the present disclosure.
FIG. 6 is a schematic structural diagram of a data processing device provided by some embodiments of the present disclosure.
FIG. 7 is a further schematic structural diagram of the data processing device provided by some embodiments of the present disclosure.

### DETAILED DESCRIPTION

It should be understood that the specific embodiments described herein are only used to explain the present disclosure, but not intended to limit the present disclosure.

Suppose that there is a piece of code configured to add 1 to 100 pieces of data, vine represents a vector plus-one instruction, a left operand represents a target vector register, and a right operand represents a source operand stored in a source vector register. The source operand is added 1 and then stored in the target vector register.

In case that the number of vector register groups of a VDSP is small, the data needs to be stored in a memory. Corresponding execution codes are as follows.

```
 set r0, #input_ addr
 set r1,#output_ addr
 ldi vr1,r0
 vinc vr2,vr1 | ldi vr1,vr0
 Label: loop 98
 vsti r1,vr2 | vine vr2,vr1 | ldi vr1,r0
 jump label
 vsti r1,vr2 | vinc vr2,vr1
 vsti r1,vr2
```

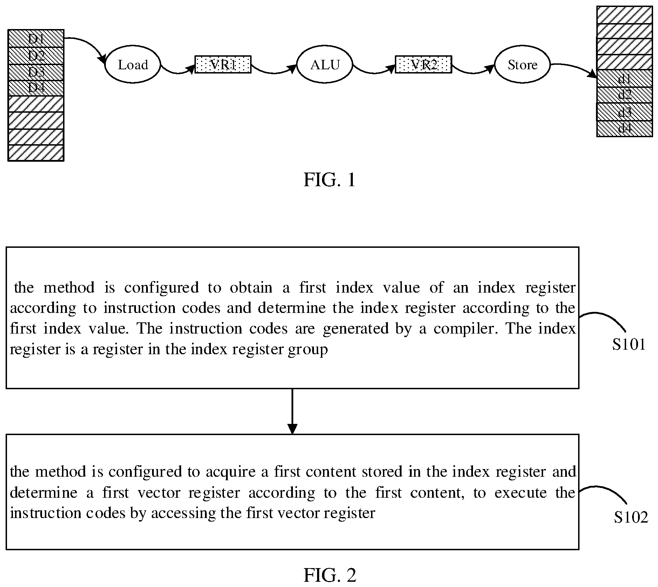

Since the registers cannot be accessed indirectly, in response to being accessed by using a loop instruction, the data can only be stored in a memory. All the data is processed by executing a loading operation, a storing operation, and an address auto increment operation to each data. As shown in FIG. 1, input data D1-D4 and output data d1-d4 are stored in the memory. A loop core is needed to execute a vinc operation, an operation of loading a next data, and an operation of storing a last data. The power consumption of overall processing is very large.

When the VDSP provides a very large vector register group, the data is stored in the registers. Corresponding execution codes are as follows.

```
  vinc vr100,vr0
 vinc vr101,vr1
 Vinc vr199,vr99
```

During the execution of the above instructions, the vinc instruction in a loop can only access the fixed registers after compilation. Therefore, 100 pieces of data cannot be accessed by using the loop instruction, but can only be expanded 100 times by using the instructions. Each expansion may be implemented by using different registers. This method will significantly increase the amount of codes, an instruction memory and the power consumption of a processor fetching instructions.

In order to solve the above problems, a data processing method, a data processing device, and a storage medium of the present disclosure are proposed, which are described in detail by the following embodiments.

### Example 1

Some embodiments of the present disclosure provide a data processing method. The method is applied to a data processing device. A processor of the data processing device includes an index register group. As shown in FIG. 2, the method may include the following operations.

S101, the method is configured to obtain a first index value of an index register according to instruction codes and determine the index register according to the first index value. The instruction codes are generated by a compiler. The index register is a register in the index register group.

The data processing method provided by some embodiments of the present disclosure is applicable to a scenario in which the multiple data in one instruction are processed by using a vector register group.

In some embodiments of the present disclosure, the data processing device generates the instruction codes by using the compiler, and the processor of the data processing device is a vector digital signal processor (VDSP).

It can be understood that the instruction codes generated by the compiler is consistent with an actual running code, the behavior of the compiled program is fixed and predictable, and the subsequent one-step debugging function of the instruction codes may be supported.

In some embodiments of the present disclosure, the processor includes the index register group. In the instruction codes, an index register field is configured for the index register in the index register group. The processor is configured to determine an address of the corresponding index register by using the index register field. A value of the index register field is the first index value of the index register.

In some embodiments of the present disclosure, the instruction codes may be executed repeatedly. In response to the instruction codes being executed in each round, the different vector register is accessed. In response to the instruction codes being executed in the present round, the instruction codes are decoded firstly, and the fields in the instruction codes are analyzed in turn. In response to the register field being analyzed, a corresponding value of the index register field is acquired. The corresponding value of the index register field is determined as the first index value of the index register.

In some embodiments of the present disclosure, the type of the vector register addressed indirectly by using the index register includes a source vector register and a target vector register.

In some embodiments, a first index register may be configured for the source vector register and a second index register may be configured for the target vector register. In some embodiments, the source vector register and the target vector register may use the same index register, which may be selected according to an actual situation, and not specifically limited by the embodiments of the present disclosure.

In some embodiments, in case that the first index register is configured for the source vector register and the second index register is configured for the target vector register, an index value of the first index register and an index value of the second index register are extracted from the instruction codes. In this case, the index value of the first index register and the index value of the second index register are the first index value.

In some embodiments of the present disclosure, after obtaining the first index value of the index register, the method is configured to determine the index register for indirect addressing according to the first index value. In some embodiments, a corresponding relationship between the index value and the address of the index register may be set in advance. Then the address of the index register corresponding to the first index value may be searched for from the corresponding relationship between the index value and the index register, so as to locate the index register for indirect addressing during the execution of the instruction in the present round.

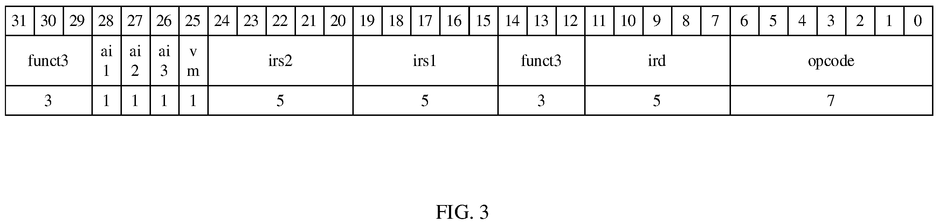

For example, as shown in FIG. 3, taking the instruction codes in 32 bits encoding format as an example, a field irs1 and a field irs2 indicate a serial number of the source index register, and a field ird indicates a serial number of the target index register. It can be seen from FIG. 3 that the field irs1, the field irs2 and the field ird occupy 5 bits respectively. That is, the field irs1, the field irs2 and the field ird may respectively encode 32 index registers to meet the requirements of different platforms. When the VDSP is running, the instruction codes are taken out of a program code space firstly, and then the instruction codes are decoded. In response to being analyzed, the field irs 1, the field irs2, and the field ird are configured to address the vector register indirectly. In response to a value of the irs 1 field being 2, a third index register is taken out, and a serial number of the index registers starts from 0.

S 102, the method is configured to acquire a first content stored in the index register and determine a first vector register according to the first content, to execute the instruction codes by accessing the first vector register.

After the data processing device determines the index register according to the first index value, the data processing device is configured to acquire the first content stored in the index register and determine the first vector register according to the first content.

In some embodiments, the number of the index register is one, and the source vector register and the target vector register share the same index register. The method is configured to store a second index value of an initial source vector register and a third index value of a target source vector register in a special register or fix them in the instruction codes. A process of the data processing device determining the first vector register according to the first content stored in the index memory includes the following operations: acquiring the second index value corresponding to the initial source vector register and the third index value corresponding to the initial target vector register; determining the source vector register according to the second index value and the first content; determining the target vector register according to the third index value and the first content; and determining the source vector register and the target vector register as the first vector register.

It should be understood that, the first content stored in the index register represents an offset of the index register. The second index value of the initial source vector register is added to the offset of the index register to obtain the source vector register. The third index value of the initial target vector register is added to the offset of the index register to obtain the target vector register.

In some embodiments, the index register includes the first index register and the second index register. The first index register is configured for indirect addressing of the source vector register, and the second index register is configured for indirect addressing of the target vector register, so as to obtain a first address offset stored in the first index register and a second address offset stored in the second index register respectively. In this case, the first address offset and the second address offset are the aforementioned first content. Correspondingly, A process of the data processing device determining the first vector register according to the first content includes the following operations: decoding the first address offset to obtain a first address and determining the source vector register corresponding to the first address; decoding the second address offset to obtain a second address and determining the target vector register corresponding to the second address; and determining the source vector register and the target vector register as the first vector register.

For example, as shown in FIG. 3, in response to a value of the third index register is 220, an address of the source vector register corresponding to the third index register is 221, and the serial number of the index registers starts from 0. The corresponding source vector register indirectly addressed by using the index register may be represented by VR [IR [irs1]].

In some embodiments of the present disclosure, a plurality of index registers may be nested to access the vector register indirectly. That is, the method is configured to acquire an address of index register 1 of the plurality of index registers from the instruction codes, acquire an address of a next index register from the index register 1 until index register 2 storing the address of the vector register is acquired, and access the vector register indirectly by using the index register 2, so as to complete a process of indirectly accessing the vector register by using the nested plurality of index registers.

In some embodiments of the present disclosure, the instruction codes are configured with an operation field, and a value of the operation field corresponds to a piece of instruction operation code. In some embodiments, the piece of instruction operation code includes: a loading operation, a storage operation, an arithmetic operation, a logic operation, and a shift operation. The specific piece of instruction operation code may be selected according to an actual situation, which is not specifically limited by the embodiments of the present disclosure.

In some embodiments of the present disclosure, the method is configured to acquire arithmetic and logic operations from the instruction codes, acquire source data from the source vector register, execute the arithmetic and logic operations to the source data to obtain target data, and store the target data in the target vector register. At this time, the execution of the instruction codes of the present round is finished.

In some embodiments, the arithmetic operation may include: an addition operation, a subtraction operation, a multiplication, a division operation, a remainder operation, an exponentiation operation, etc, and the logical operation may include: a logical and operation, a logical not operation, a logical or operation, a logical xor operation, etc., which may be selected according to an actual situation, and not specifically limited by the embodiments of the present disclosure.

In some embodiments of the present disclosure, the data processing device includes an arithmetic and logic unit (ALU). The arithmetic and logic operations in the ALU are specified by the instruction codes. After the source vector register and the target vector register are determined, the ALU is configured to take the source data from the source vector register, execute the arithmetic and logic operations to the source data, and store the target data obtained by the operation in the target vector register.

For example, as shown in FIG. 3, a field opcode represents a piece of instruction operation code, and the field opcode occupies 7 bits. The field opcode may carry the operation codes of loading, storage, arithmetic, logic, shift, etc. Furthermore, a field vm indicates whether the instruction codes execute a mask operation, and the field vm occupies 1 bit. A field funct3 is a user-defined field, and the field funct3 occupies 6 bits. In the present disclosure, since the data is read and stored directly in the vector register without loading and storing the operation codes, the instruction codes degenerate to a format of one operand, which can be distinguished by the field opcode or the field funct3.

It should be understood that there are usually a plurality of instruction slots in the VDSP, and the loading, the storage, and the ALU belong to different instruction slots. In the present disclosure, the data is read and stored directly in the vector register, without loading and storing the operation code, so that only the ALU instruction slot is running, and the loading instruction slot and the storage instruction slot are idle. In this way, the loading instruction slot and the store instruction slot may increase the parallel processing capability of the VDSP by adding other instructions.

Furthermore, after the data processing device determines the first vector register according to the first content, the data processing device is configured to execute the instruction codes by accessing the first vector register. In response to the data processing device having executed the instruction codes, and/or the data processing device executing the instruction codes, the data processing device is configured to update the first content in the index register according to the instruction codes. In response to a next round of executing the instruction codes, the data processing device is configured to access a second vector register based on an updated first content, and use the second vector register for the looping execution of the instruction codes in the next round.

In some embodiments of the present disclosure, after executing the instruction codes, the data processing device may be configured to update the first content in the index register according to the instruction codes. In some embodiments, the data processing device may be configured to update the first content in the index register according to the instruction codes in a process of executing the instruction codes. The specific time for the data processing device to update the first content is selected according to an actual situation, which is not specifically limited in the embodiments of the present disclosure.

In some embodiments of the present disclosure, the instruction codes are also configured with an offset field corresponding to the index register. The value of the offset field represents an offset value and an offset type. During the decoding of the instruction codes, the offset value and the offset type are acquired in response to the offset field being analyzed, and the first content is adjusted according to the offset value and the offset type to obtain the updated first content. Then the updated first content is written into the index register to replace the first content with the updated first content.

In some embodiments, the offset type includes: increment, decrement and other offset operation types, which may be selected according to an actual situation, and not specifically limited by the embodiments of the present disclosure.

In some embodiments of the present disclosure, the first content is offset according to the offset type, and the offset value is taken as an offset step size, so as to obtain the updated first content. Then the updated first content is configured to replace the first content in the index register.

For example, as shown in FIG. 3, a field ai1 indicates whether the field irs 1 is subject to an auto increment operation, a field ai2 indicates whether the field irs2 is subject to an auto increment operation, and a field ai3 indicates whether the field ird is subject to an auto increment operation. 0 indicates that no auto increment operation is executed. 1 indicates that the auto increment operation is executed, that is, the offset value corresponding to 1 is 1, and the offset type is increased. In response to the field ai1 being 1, the third index register and the value of the third index register corresponding to the field irs 1 are obtained, that is, 220. At this time, the value of the third index register is added 1 to obtain an updated value of the third index register, that is, 221, and 221 is written to the third index register.

In some embodiments of the present disclosure, in response to a next round of executing the instruction codes, the data processing device is configured to decode the instruction codes to obtain the first index value of the index register. Then the data processing device is configured to obtain the updated first content stored in the index register, and determine the second vector register according to the updated first content. The data processing device is further configured to execute the instruction codes of the next round by accessing the second vector register, and continues to update the updated first content in the index register according to the instruction codes, so as to access different vector registers based on the updated first content in response to the instruction codes being subsequently executed.

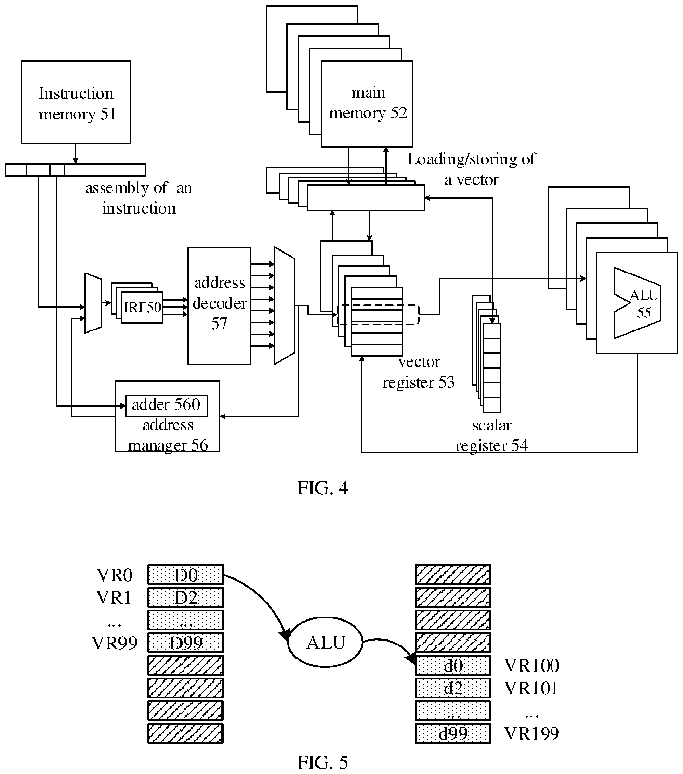

In an actual process of addressing mapping of a vector register file in the processor, as shown in FIG. 4, the VDSP may include an index register file (IRF) 50, an instruction memory 51, a main memory 52, a vector register 53, a scalar register 54, an ALU 55, an address manager 56, and an address decoder 57. An address index of the vector register 53 may be configured by using the IRF 50, so as to access any one of the vector registers. The IRF 50 works as follow. In each instruction period, the method is configured to search for the instruction codes in the instruction memory 51, decode the instruction codes to obtain an IR index value, determine the corresponding IRF 50 according to the IR index value, obtain the address offset of the vector register 53 to be accessed from the IRF 50, and transmit the address offset of the vector register 53 to the address decoder 57. The address decoder 57 is configured to decode the address offset of the vector register 53 to acquire the actual address of the vector register 53 for the ALU 55 to access. The ALU 55 is configured to store an intermediate result in the vector register 53 after finishing a corresponding operation. Then an offset value of an auto increment is determined according to a corresponding field configured in the instruction codes, and the value of the address offset of the vector register 53 and the offset value of the auto increment are transmitted to an adder 560 of the address manager 56. The adder 560 generates an updated address index, and writes the updated address index back to the IRF used by the instruction codes as the address offset of a next access. It should be understood that, in FIG. 4, the data with a size of several vector registers are loaded from the main memory 52 to the internal vector register 53, after the execution of an instruction is finished, the data in the vector register 53 storing results is stored back to the main memory 52, and the scalar register 54 is configured to count an address of the main memory.

For example, suppose that there is a piece of code configured to add 1 to 100 pieces of data, vine represents a vector plus-one instruction, a left operand represents a target vector register, and a right operand represents a source operand stored in a source vector register. The source operand is added 1 and then stored in the target vector register. The codes that support the processor to access the registers indirectly is as follows.

```
  set ir0,0
 set ir1,100
 label: loop 100
 vine vr[ir1++], vr[ir0++]
 jump label
```

As shown in FIG. 5, 100 pieces of input data D0~D99 are directly put in the registers VR0~VR99. The ALU is configured to add 1 to the input data D0~D99 and put the processed data into VR100∼VR199. The processed data is d0~d99. It can be seen from the codes that an initial value of the index ir0 of an input register is set to 0, which indicates that the access starts from VR0. An initial value of the index ir1 of an output register is set to 100, which indicates that the output starts from VR100. In each of 100 loops, ir0 and ir1 is added 1, and a next input register and a next output register will be accessed in a next loop. It can be seen from the above that only one instruction is needed to realize 100 times of looping execution of the instruction, thereby reducing the amount of code, an instruction memory and the power consumption of the processor fetching instructions.

It can be understood that the processor includes the index register group, and the instruction codes are configured with the index value of the index register. The data processing device is configured to determine the index register by using the instruction codes, and access different vector registers during the execution of the instruction codes in different rounds by accessing and updating the first content in the index register, thereby reducing the amount of codes and an instruction memory.

### Example 2

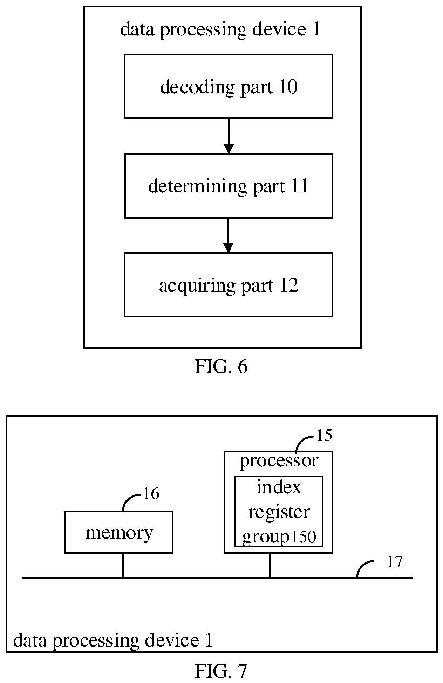

The embodiments of the present disclosure provide a data processing device. As shown in FIG. 6, A processor of the data processing device includes an index register group. The data processing device 1 includes the following parts: a decoding part 10, configured to obtain a first index value of an index register according to instruction codes; a determining part 11, configured to determine the index register according to the first index value and determine a first vector register according to a first content, to execute the instruction codes by accessing the first vector register; and an acquiring part 12, configured to acquire the first content stored in the index register. Herein, the instruction codes are generated by a compiler, and the index register is a register in the index register group.

In some embodiments, the device further includes an instruction execution part and an updating part. The instruction execution part is configured to execute the instruction codes by accessing the first vector register. The updating part is configured to update the first content in the index register according to the instruction codes, and access a second vector register based on an updated first content in response to a next round of executing the instruction codes.

In some embodiments, the instruction codes are configured with an index register field. The decoding part 10 is further configured to decode the instruction codes. The acquiring part 12 is further configured to acquire a value corresponding to the index register field. The determining part 11 is further configured to determine the value corresponding to the index register field as the first index value of the index register.

In some embodiments, the updating part is further configured to update the first content in the index register according to the instruction codes in response to the instruction codes having been executed, and/or the instruction codes being executed.

In some embodiments, the data processing device further includes an adjusting part and a writing part. The acquiring part 12 is further configured to acquire an offset value and an offset type from the instruction codes. The adjusting part is configured to adjust the first content according to the offset value and the offset type to obtain the updated first content. The writing part is configured to write the updated first content into the index register and replace the first content with the updated first content.

In some embodiments, the index register includes one index register. The acquiring part 12 is further configured to acquire a second index value corresponding to an initial source vector register and a third index value corresponding to an initial target vector register. The determining part 11 is further configured to determine a source vector register according to the second index value and the first content, determine a target vector register according to the third index value and the first content, and determine the source vector register and the target vector register as the first vector register.

In some embodiments, the index register includes a first index register and a second index register. The acquiring part 12 is further configured to acquire a first address offset stored in the first index register, and acquire a second address offset stored in the second index register. The determining part 11 is further configured to determine the first address offset and the second address offset as the first content.

In some embodiments, the decoding part 10 is further configured to decode the first address offset to obtain a first address, and decode the second address offset to obtain a second address. The determining part 11 is further configured to determine a source vector register corresponding to the first address, determine a target vector register corresponding to the second address, and determine the source vector register and the target vector register as the first vector register.

In some embodiments, the data processing device further includes a storing part. The acquiring part 12 is further configured to acquire arithmetic and logic operations from the instruction codes, and acquire source data from the source vector register. The instruction execution part is further configured to execute the arithmetic and logic operations to the source data to obtain target data. The storing part is configured to store the target data in the target vector register.

The embodiments of the present disclosure provide a data processing device. A processor of the data processing device includes an index register group. The processor is configured to obtain a first index value of an index register according to instruction codes, determine the index register according to the first index value, acquire a first content stored in the index register, and determine a first vector register according to the first content, to execute the instruction codes by accessing the first vector register. Herein, the instruction codes are generated by a compiler, and the index register is a register in the index register group. It can be seen that the processor of the data processing device provided by some embodiments includes an index register group, and the instruction codes are configured with the index value of the index register. The data processing device is configured to determine the index register by using the instruction codes, and access different vector registers during the execution of the instruction codes in different rounds by accessing and updating the first content in the index register, thereby reducing the amount of codes and an instruction memory.

FIG. 7 is a further schematic structural diagram of the data processing device provided by some embodiments of the present disclosure. In a practical application, the data processing device is based on the same disclosure concept of the embodiments described above. As shown in FIG. 7, the data processing device 1 of some embodiments includes a processor 15, a memory 16 and a communication bus 17. The processor 15 includes an index register group 150.

In some embodiments, the aforesaid decoding part 10, the aforesaid determining part 11, the aforesaid acquiring part 12, the aforesaid instruction execution part, the aforesaid updating part, the aforesaid adjusting part and the aforesaid writing part may be implemented by the processor 15 of the data processing device 1. The aforesaid storing part may be implemented by the memory 16 of the data processing device 1. The aforesaid processor 15 may be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller and a microprocessor. It can be understood that, for different devices, the electronic component configured to realize the aforesaid functions of the processor may also be others, which is not specifically limited by the embodiments.

In some embodiments of the present disclosure, the communication bus 17 is configured to realize the communication between the processor 15 and the memory 16. In response to executing a running program stored in the memory 16, the processor 15 is configured to execute the following data processing method.

The processor 15 is configured to obtain a first index value of an index register according to instruction codes, determine the index register according to the first index value, acquire a first content stored in the index register, and determine a first vector register according to the first content, to execute the instruction codes by accessing the first vector register. Herein, the instruction codes are generated by a compiler, and the index register is a register in the index register group 150.

In some embodiments of the present disclosure, the processor 15 is configured to execute the instruction codes by accessing the first vector register, update the first content in the index register according to the instruction codes, and access a second vector register based on an updated first content in response to a next round of executing the instruction codes.

In some embodiments of the present disclosure, the instruction codes are configured with an index register field. The aforesaid processor 15 is further configured to decode the instruction codes, acquire a value corresponding to the index register field, and determine the value corresponding to the index register field as the first index value of the index register.

In some embodiments of the present disclosure, the aforesaid processor 15 is further configured to update the first content in the index register according to the instruction codes in response to the instruction codes having been executed, and/or the instruction codes being executed.

In some embodiments of the present disclosure, the aforesaid processor 15 is further configured to acquire an offset value and an offset type from the instruction codes, adjust the first content according to the offset value and the offset type to obtain the updated first content, and write the updated first content into the index register and replacing the first content with the updated first content.

In some embodiments of the present disclosure, the index register includes one index register. The aforesaid processor 15 is further configured to acquire a second index value corresponding to an initial source vector register and a third index value corresponding to an initial target vector register, determine a source vector register according to the second index value and the first content, determine a target vector register according to the third index value and the first content, and determine the source vector register and the target vector register as the first vector register.

In some embodiments of the present disclosure, the index register includes a first index register and a second index register. The aforesaid processor 15 is further configured to acquire a first address offset stored in the first index register, acquire a second address offset stored in the second index register, and determine the first address offset and the second address offset as the first content.

In some embodiments of the present disclosure, the aforesaid processor 15 is further configured to decode the first address offset to obtain a first address and determining a source vector register corresponding to the first address, decode the second address offset to obtain a second address, determine a target vector register corresponding to the second address, and determine the source vector register and the target vector register as the first vector register.

In some embodiments of the present disclosure, the aforesaid processor 15 is further configured to acquire arithmetic and logic operations from the instruction codes, acquire source data from the source vector register, execute the arithmetic and logic operations to the source data to obtain target data, and store the target data in the target vector register.

The embodiments of the present disclosure provide a storage medium. The storage medium stores one or more computer program. The one or more computer program may be executed by one or more processor and applied to a data processing device. The one or more computer program is configured to execute the data processing method described above.

It should be noted that, in the present disclosure, the terms "include", "contain" or any other modification thereof are intended to cover non-exclusive inclusion. so that a process, a method, an article or a device including a series of elements not only includes those elements, but also includes other elements not explicitly listed, or further includes the elements inherent to the process, method, article or device. Without further restrictions, the element defined by the statement "include a..." does not exclude the existence of another identical element in the process, method, article or device including the element.

Through the above description of the embodiments, those skilled in the art may clearly understand that the aforesaid embodiments may be implemented in the way of software and necessary general hardware platform, or in the way of hardware, and in many cases the former is a better implementation. Based on such understanding, the technical solution of the present disclosure, in essence or the part that contributes to the related art may be embodied in the form of a software product. The software product may be stored in a in a storage medium (such as a read-only memory (ROM) / a random access memory (RAM), a magnetic disk, and an optical disk). The computer software product may include a number of instructions causing an image display device (the image display device may be a mobile phone, a computer, a server, an air conditioner, or a network devices) to perform the methods described in various embodiments of the present disclosure.

The above description is only some embodiments of the present disclosure, and is not intended to limit the protection scope of the present disclosure.

## Claims

1. A data processing method applied to a data processing device, a processor of the data processing device comprising an index register group, and the method comprising:
obtaining a first index value of an index register according to instruction codes and determining the index register according to the first index value, wherein the instruction codes are generated by a compiler, and the index register is a register in the index register group; and
acquiring a first content stored in the index register and determining a first vector register according to the first content, to execute the instruction codes by accessing the first vector register.

2. The method according to claim 1, wherein, after the determining a first vector register according to the first content, the method further comprises:
executing the instruction codes by accessing the first vector register; and
updating the first content in the index register according to the instruction codes, and accessing a second vector register based on an updated first content in response to a next round of executing the instruction codes.

3. The method according to claim 1, wherein the instruction codes are configured with an index register field, and the obtaining a first index value of an index register according to instruction codes comprises:
decoding the instruction codes, and acquiring a value corresponding to the index register field; and
determining the value corresponding to the index register field as the first index value of the index register.

4. The method according to claim 2, wherein the updating the first content in the index register according to the instruction codes comprises:
updating the first content in the index register according to the instruction codes in response to the instruction codes having been executed, and/or the instruction codes being executed.

5. The method according to claim 2 or 4, wherein the updating the first content in the index register according to the instruction codes comprises:
acquiring an offset value and an offset type from the instruction codes;
adjusting the first content according to the offset value and the offset type to obtain the updated first content; and
writing the updated first content into the index register and replacing the first content with the updated first content.

6. The method according to claim 1, wherein the index register comprises one index register, and the determining a first vector register according to the first content comprises:
acquiring a second index value corresponding to an initial source vector register and a third index value corresponding to an initial target vector register;
determining a source vector register according to the second index value and the first content;
determining a target vector register according to the third index value and the first content; and
determining the source vector register and the target vector register as the first vector register.

7. The method according to claim 1, wherein the index register comprises a first index register and a second index register, and the acquiring a first content stored in the index register comprises:
acquiring a first address offset stored in the first index register;
acquiring a second address offset stored in the second index register; and
determining the first address offset and the second address offset as the first content.

8. The method according to claim 7, wherein the determining a first vector register according to the first content comprises:
decoding the first address offset to obtain a first address and determining a source vector register corresponding to the first address;
decoding the second address offset to obtain a second address and determining a target vector register corresponding to the second address; and
determining the source vector register and the target vector register as the first vector register.

9. The method according to claim 6 or 8, wherein the executing the instruction codes by accessing the first vector register comprises:
acquiring arithmetic and logic operations from the instruction codes;
acquiring source data from the source vector register, and executing the arithmetic and logic operations to the source data to obtain target data; and
storing the target data in the target vector register.

10. A data processing device, a processor of the data processing device comprising an index register group, and the data processing device comprising:
a decoding part, configured to obtain a first index value of an index register according to instruction codes, wherein the instruction codes are generated by a compiler, and the index register is a register in the index register group;
a determining part, configured to determine the index register according to the first index value and determine a first vector register according to a first content, to execute the instruction codes by accessing the first vector register; and
an acquiring part, configured to acquire the first content stored in the index register.

11. The device according to claim 10, wherein the device further comprises an instruction execution part and an updating part;
the instruction execution part is configured to execute the instruction codes by accessing the first vector register; and
the updating part is configured to update the first content in the index register according to the instruction codes, and access a second vector register based on an updated first content in response to a next round of executing the instruction codes.

12. The device according to claim 10, wherein the instruction codes are configured with an index register field;
the decoding part is further configured to decode the instruction codes;
the acquiring part is further configured to acquire a value corresponding to the index register field; and
the determining part is further configured to determine the value corresponding to the index register field as the first index value of the index register.

13. The device according to claim 11, wherein the updating part is further configured to update the first content in the index register according to the instruction codes in response to the instruction codes having been executed, and/or the instruction codes being executed.

14. The device according to claim 11 or 13, wherein the device further comprises an adjusting part and a writing part;
the acquiring part is further configured to acquire an offset value and an offset type from the instruction codes;
the adjusting part is configured to adjust the first content according to the offset value and the offset type to obtain the updated first content; and
the writing part is configured to write the updated first content into the index register and replace the first content with the updated first content.

15. The device according to claim 10, wherein the index register comprises one index register,
the acquiring part is further configured to acquire a second index value corresponding to an initial source vector register and a third index value corresponding to an initial target vector register; and
the determining part is further configured to determine a source vector register according to the second index value and the first content, determine a target vector register according to the third index value and the first content, and determine the source vector register and the target vector register as the first vector register.

16. The device according to claim 10, wherein the index register comprises a first index register and a second index register;
the acquiring part is further configured to acquire a first address offset stored in the first index register, and acquire a second address offset stored in the second index register; and
the determining part is further configured to determine the first address offset and the second address offset as the first content.

17. The device according to claim 16, wherein the decoding part is further configured to decode the first address offset to obtain a first address, and decode the second address offset to obtain a second address; and
the determining part is further configured to determine a source vector register corresponding to the first address, determine a target vector register corresponding to the second address, and determine the source vector register and the target vector register as the first vector register.

18. The device according to claim 15 or 17, wherein the device further comprises a storing part;
the acquiring part is further configured to acquire arithmetic and logic operations from the instruction codes, and acquire source data from the source vector register;
the instruction execution part is further configured to execute the arithmetic and logic operations to the source data to obtain target data; and
the storing part is configured to store the target data in the target vector register.

19. A data processing device comprising a processor, a memory, and a communication bus; the processor comprising an index register group, and in response to executing a running program stored in the memory, the processor executing a method described in any one of claims 1-9.

20. A storage medium storing a computer program, in response to the computer program being executed by a processor, the processor executing a method described in any one of claims 1-9.
